Europäisches Patentamt

European Patent Office

Office européen des brevets

(11) Veröffentlichungsnummer : **0 095 752**
**B1**

(12) **EUROPÄISCHE PATENTSCHRIFT**

(45) Veröffentlichungstag der Patentschrift :
09.09.87

(51) Int. Cl.⁴ : **F 16 L 55/02**

(21) Anmeldenummer : 83105278.2

(22) Anmeldetag : 27.05.83

(54) Schalldämpfeinrichtung für luftführende Kanäle von Klimaanlagen und dergleichen.

(30) Priorität : 27.05.82 DE 3220022

(43) Veröffentlichungstag der Anmeldung :
07.12.83 Patentblatt 83/49

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
DE-A- 2 326 499
DE-A- 2 521 119
DE-B- 2 814 717
DE-C-    977 514
DE-U- 1 926 526
DE-U- 7 239 458

(73) Patentinhaber : *Cellofoam Deutschland GmbH*
Postfach 1252
D-7950 Biberach an der Riss 1 (DE)

(72) Erfinder : **Rehlen, Helmut**
Härte 6
D-7951 Ingoldingen (DE)
Erfinder : **Roellinghoff, Jürgen**
Fohrenweg 9
D-7950 Biberach-Mettenberg (DE)

(74) Vertreter : **Klingseisen, Franz, Dipl.-Ing. et al**
Dr. F. Zumstein sen. Dr. E. Assmann Dr. F. Zumstein jun. Dipl.-Ing. F. Klingseisen Bräuhausstrasse 4
D-8000 München 2 (DE)

## Beschreibung

Die Erfindung betrifft eine Schalldämpfeinrichtung nach dem obergegriff des Anspruchs 1.

Aus der DE-U-7 239 458 ist ein Flüssigkeitsschalldämpfer bekannt, der aus einem Außenrohr besteht, auf dessen Innenumfang eine Schicht aus elastomerem Schaumstoff aufgebracht ist, wobei durch diesen Schalldämpfer zwei Rohrenden miteinander verbunden werden. Bei diesem Flüssigkeitsschalldämpfer geht es um Körperschalldämpfung, wobei der durch die Rohrwand weitergeleitete Körperschall durch das Zwischenstück aus elastomerem Schaumstoff derart unterbrochen wird, daß die Übertragung des Körperschalls von einem Rohrende auf das andere verhindert wird. Damit diese Anordnung dem Flüssigkeitsdurck standhalten kann, wird auf der Außenseite das Außenrohr vorgesehen, das entsprechend steif ist.

Der Erfindung.liegt die Aufgabe zugrunde, eine Schalldämpfeinrichtung der eingangs angegebenen Art so auszubilden, daß sie bei kostengünstigem Aufbau eine wirksame Reduzierung der Schallemission an von Luft durchströmten Kanälen gewährleistet.

Diese Aufgabe wird durch die Merkmale im Kennzeichen des Anspruchs 1 gelöst. Durch den schallneutralen Träger auf der Außenseite und die luftdurchlässige Verhautung auf der Innenseite des in dem Träger angeordneten Schaumstoffs ergibt sich insgesamt eine sehr wirksame Reduzierung der Schallemission an Belüftungskanälen, die mit einer solchen Schalldämpfeinrichtung ausgestattet sind.

Vorteilhafte Ausgestaltungen der Erfindung sind in den weiteren Ansprüchen angegeben.

Die Erfindung wird nachfolgend anhand der Zeichnung beispielsweise näher erläutert.

Es zeigen :

Figur 1 in einer schematischen Querschnittsansicht den Austrittsbereich eines Lüftungskanals einer Klimaanlage ;

Figur 2 in einer perspektivischen Ansicht einen in eine Lüftungsanlage, beispielsweise eines kraftfahrzeugs, einsetzbaren, selbsttragenden Kanalabschnitt.

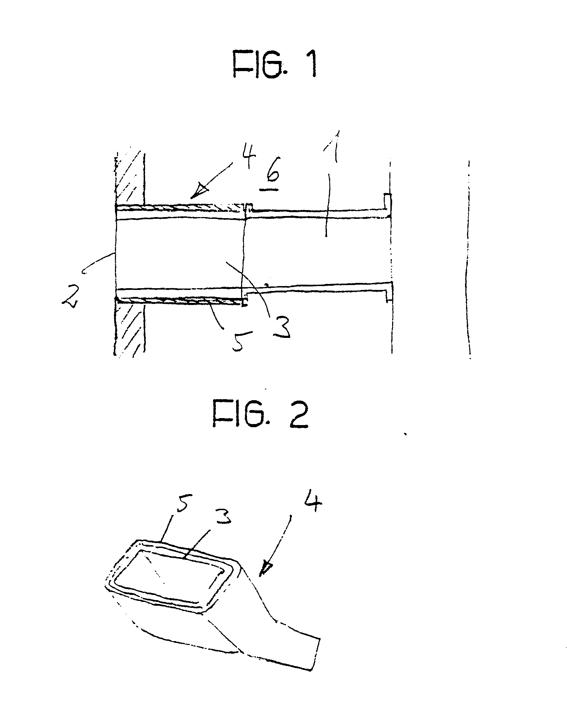

Die Fig. 1 zeigt schematisch einen Lüftungskanal 1 einer Klimaanlage, der bei 2 in einen zu klimatisierenden Raum mündet, wobei vor der mündungsöffnung ein Gitter vorgesehen sein kann oder auch nicht. Auf einem Abschnitt vor der Mündungsöffnung 2 ist der Lüftungskanal 1 mit einer Auskleidung 3 aus einer verhauteten Schaumstoffbahn versehen, wobei die verhautete Oberfläche der schaumstoffbahn innen liegt. Die verhautete Oberfläche der Schaumstoffbahn verhindert zwar eine Verschmutzung der Poren des an sich offenzelligen Schaumstoffs und stellt auch einen geringeren Strömungswiderstand für die durch den Lüftungskanal 1 strömende Luft dar als eine nicht verhautete Oberfläche einer Schaumstoffbahn, jedoch liegt der wesentliche Vorteil der verhauteten Schaumstoffbahn darin, daß Schallwellen besser absorbiert werden können, die durch die Mündungsöffnung 2 austreten und beispielsweise von einem nicht dargestellten Lüfterrad oder dergl. oder von der in den Schächten der Klimaanlage strömenden Luft hervorgerufen werden. Der verhautete Schaumstoff gestattet eine Anpassung der Dämpfungs- bzw. Absorptionseigenschaften an das jeweilige Frequenzspektrum, wodurch hohe Schallabsorptionswerte erreicht werden.

Die Schaumstoffauskleidung 3 wird aus Bahnmaterial gefertigt, das auf die erwünschten Schallabsorptionswerte eingestellt wird. Die verhautete Oberfläche der Schaumstoffbahn wird vorteilhafterweise noppenförmig ausgebildet, wodurch eine verbesserte Schallabsorption erzielt wird. Anstelle von Noppen kann auch ein anderes Profil der verhauteten oberfläche vorgesehen werden. Dabei beruht die akustische Wirkungsweise des noch teilsweise luftdurchlässigen Schaumstoffes auf einer Überlagerung von Resonanzverhalten und Energieumwandlung infolge Luftreibung in den Schaumstoffzellen. Je dicker die Schaumstoffschicht ist, desto mehr verschiebt sich der Absorptionsbereich zu den niedrigeren Frequenzen.

Es ist ein selbsttragender Kanalabschnitt 4 vorgesehen. Dieser Kanalabschnitt 4, der sich an einen beispielsweise aus Blech bestehenden Lüftungskanal 1 anschließt, besteht aus einem äußeren träger 5, auf dessen Innenseite die Schaumstoffauskleidung 3 angebracht ist. Der für die Schallabsorption vorgesehene Kanalabschnitt 4 kann die gleiche Querschnittsform haben wie der Lüfungskanal 1 oder auch eine andere Querschnittsform. Auf der Außenseite ist der Träger 5 von einem Hohlraum 6 umgeben, in den Schall abgeleitet werden kann, ohne daß er in dem zu klimatisierenden Raum stört.

Der Träger 5 ist ausreichend steif, um die Schaumstoffbahn 3 gegen Ausbeulen abzustützen, wenn beispielsweise die Mündungsöffnung 2 durch das davor angebrachte Gitter geschlossen ist und durch das Gebläse bzw. Lüfterrad der Anlage ein gewisser Druck im Lüftungskanal 1 erzeugt wird. Für eine gute Schallabsorption der Auskleidung 3 ist der Träger 5 schalldurchlässig ausgebildet. Vorzugsweise besteht der Träger 5 aus einem Vlies, das beispielsweise nach Tränken mit Phenolharz ausreichend steif und verformbar ist, so daß der Kanalabschnitt 4 in die erwünschte Form gebracht werden kann. Das Vlies kann eine relativ hohe Schalldurchlässigkeit aufweisen. Die auf verhautete Oberfläche der Schaumstoffauskleidung 3 auftreffenden Schallwellen werden zum Teil gedämpft und zum Teil treten sie durch den Schaumstoff hindurch, wobei der Träger keine reflektierende Fläche bildet, sondern diese Schallwellen in den Raum 6 durchtreten läßt, der von dem zu klimatisierenden Raum getrennt ist und deshalb zur Ableitung der Schallwellen verwendet werden kann.

Nach einer anderen Ausgestaltung kann der Träger aus einem harten Material bestehen, das mit Löchern versehen ist, so daß keine nennenswerte Schallreflexion der durch die Schaumstoffauskleidung 3 tretenden Schallwellen am Träger 5 auftritt. Der Träger soll einen Lochanteil von wenigstens 30 bis 40 % haben. Hierbei kann ein Träger aus Metall oder Kunststoff vorgesehen sein.

Der Träger 5 soll schallneutral sein, d. h. wenigstens 50 % der auftreffenden Schallwellen durchtreten lassen und nicht reflektieren.

Für die Herstellung des Leitungsabschnitts 4 kann eine Schaumstoffbahn mit einem Vlies kaschiert und dann durch Formgebung in die dem jeweiligen Kanalquerschnitt entsprechende Form gebracht werden. Bei dem steifen, gelochten Träger kann dieser vorgefertigt und danach die Schaumstoffauskleidung 3 aufgebracht werden. Die Verbindung mit dem Leitungsabschnitt 1 kann in beliebiger Weise vorgenommer werden.

Die Fig. 2 zeigt eine Ausführungsform eines Kanalabschnitts 4, dessen Querschnittsform sich über seine Längsabmessung verändert. Der Kanalabschnitt 4 nach Fig. 2 weist ebenfalls einen Träger 5 aus Vliesmaterial auf, das nach Tränken mit einem geeigneten Mittel in die erwünschte Form gebracht wird. Die Auskleidung des Kanalabschnitts 4 besteht aus innen verhautetem Schaumstoff.

Anstelle einer einseitig verhauteten Schaumstoffbahn kann auch eine beiden Seiten verhautete Schaumstoffbahn vorgesehen werden.

Anstelle eines relativ kurzen Stücks vor dem Austritt eines belüftungskanals 1 in den zu klimatisierenden Raum kann auch ein größerer Abschnitt mit der verhauteten Schaumstoffbahn ausgekleidet werden. Dies hängt auch von der Höhe des emittierten Schallpegels ab.

Als schallabsorbierendes Material nach dem Prinzip eines Resonanzabsorbers wird vorzugsweise ein Polyurethan-Weichschaumstoff verwendet, der nach dem in der DE-A-31 12 883 beschriebenen Verfahren hergestellt wird. Der offenporige Schaumstoff wird bei diesem Verfahren mit einer Haut auf der Oberfläche versehen, wobei in kontrollierter Weise eine vorbestimmte Luftdurchlässigkeit aufrechterhalten wird. In Abhängigkeit von der Dicke der Schaumstoffschicht und deren Gestaltung kann das Absorptionsverhalten auf einen bestimmten Frequenzbereich abgestimmt werden. So hat beispielsweise der Schallabsorptionsgrad eines offenzelligen Polyurethan-Weichschaumstoffs von einer Rohdichte von 25 kg/cm$^3$ bei einer Materialstärke von 15 mm bei etwa 2 000 Hz ein Maximum, während bei einer Materialstärke von 30 mm das Maximum bei 500 Hz liegt. Wird bei dem 15 mm starken Material die Oberfläche mit Noppen profiliert, so kann das Maximum des Schallabsorptionsgrades beispielsweise auf ca. 1 000 Hz eingestellt werden.

Die Auskleidung aus schallabsorbierendem Material in einem Lüftungskanal wird jeweils so eingesetzt, daß die Oberfläche der Auskleidung bzw. der verhauteten Schaumstoffbahn mit den Wänden des Anschlußkanals fluchtet.

## Patentansprüche

1. Schalldämpfeinrichtung für von Luft durchströmte Kanäle in Klimaanlagen und dgl., wobei über einen Längsabschnitt des Kanals ein schallabsorbierender Schaumstoff (3) auf der Kanalinnenseite und ein Träger (5) auf der Außenseite angeordnet ist dadurch gekennzeichnet, daß der schallabsorbierende Schaumstoff (3) auf der kanalinnenseite eine luftdurchlässige Verhautung aufweist, die integral mit dem Schaumstoff verschmolzen ist, und daß der Träger (5) schallneutral ist.

2. Schalldämpfeinrichtung nach Anspruch 1, dadurch gekennzeichnet, daß die verhautete Oberfläche mit Noppen oder Rippen versehen ist.

3. Schalldämpfeinrichtung nach Anspruch 1, dadurch gekennzeichnet, daß der Träger aus einem schalldurchlässigen Vlies besteht.

4. Schalldämpfeinrichtung nach Anspruch 1, dadurch gekennzeichnet, daß der Träger aus einem gelochten harten Material besteht.

5. Schalldämpfeinrichtung nach Anspruch 4, dadurch gekennzeichnet, daß der träger einen Lochanteil von wenigstens 30 bis 40 % aufweist.

## Claims

1. Sound damping device for air condition and like ducts conveying air, whereby sound absorbent foamed material (3) is provided on the duct inside and a carrier (5) is provided on the outside along a longitudinal section of the duct, characterized in that the sound absorbent foamed material (3) has an air-permeable skin on the duct inside, which is integrally molten with the foamed material and that the carrier is sound neutral.

2. Sound damping device according to claim 1, characterized in that the surface covered by a skin is provided with naps or ribs.

3. Sound damping device according to claim 1, characterized in that the carrier consists of a sound-permeable fibrous web.

4. Sound damping device according to claim 1, characterized in that the carrier consists of a perforated hard material.

5. Sound damping device according to claim 4, characterized in that the carrier has a perforation percentage of at least 30 to 40 %.

## Revendications

1. Dispositif amortisseur de bruit pour gaines parcourues par de l'air dans des installations de climatisation et installations similaires, dispositif dans lequel, sur un tronçon de la longueur de la gaine, une mousse (3) absorbant les bruits se trouve sur la face interne de la gaine et un support (5) est situé sur la face externe, caractérisé par le fait que la mousse (3) absorbant les bruits, implantée sur la face interne de la gaine, présente une pellicule perméable à l'air qui est fondue d'un seul tenant avec cette mousse ; et par le fait que le support (5) est insensible aux bruits.

2. Dispositif amortisseur de bruit selon la revendication 1, caractérisé par le fait que la surface garnie d'une pellicule est pourvue de plots ou de nervures.

3. Dispositif amortisseur de bruit selon la revendication 1, caractérisé par le fait que le support consiste en une carde perméable aux bruits.

4. Dispositif amortisseur de bruit selon la revendication 1, caractérisé par le fait que le support consiste en un matériau dur perforé.

5. Dispositif amortisseur de bruit selon la revendication 4, caractérisé par le fait que le support présente un pourcentage de trous d'au moins 30 à 40 %.

FIG. 1

FIG. 2